# EUROPÄISCHE PATENTSCHRIFT

(11) **EP 0 586 625 B1**
(45) Veröffentlichungstag und Bekanntmachung des Hinweises auf die Patenterteilung: **02.05.1997**
(21) Anmeldenummer: 93901741.4
(22) Anmeldetag: 09.01.1993
(51) Int. Cl.: B60T 8/34

(54) **HYDRAULISCHES UMSCHALTVENTIL FÜR EINE FAHRZEUGBREMSANLAGE**
HYDRAULIC SWITCH VALVE FOR A VEHICLE BRAKE SYSTEM
SOUPAPE D'INVERSION HYDRAULIQUE POUR LE SYSTEME DE FREINAGE D'UN VEHICULE AUTOMOBILE

(30) Priorität: 03.04.1992 DE 4211097; 24.10.1992 DE 4236045
(43) Veröffentlichungstag der Anmeldung: 16.03.1994
(73) Patentinhaber: ITT Automotive Europe GmbH, 60488 Frankfurt (DE)
(72) Erfinder: REINARTZ, Hans-Dieter, D-6000 Frankfurt am Main 50 (DE); BECK, Erhard, D-6290 Weilburg (DE); RISCH, Stefan, D-6108 Weiterstadt (DE)
(74) Vertreter: Portwich, Peter
(86) Internationale Anmeldenummer: EP9300033
(87) Internationale Veröffentlichungsnummer: WO9319960

(56) Entgegenhaltungen:
- EP-A- 0 320 943
- EP-A- 0 456 597
- DE-A- 3 831 426
- US-A- 5 137 339

## Beschreibung

Die Erfindung betrifft ein hydraulisches Umschaltventil gemäß dem Oberbegriff des Hauptanspruches.

Eine Bremsanlage mit einem solchen Ventil ist aus der DE- 38 31 426 A1 bekannt. In dieser Bremsanlage führt vom Hauptbremszylinder über ein hydraulisch gesteuertes 3/2-Wegeventil, welches zugleich als Umschaltventil und als Trennventil dient, und über ein elektromagnetisches, stromlos offenes Einlaßventil eine Bremsleitung zu einer Radbremse eines angetriebenen Rades. Im Falle einer Blockierschutzregelung wird über ein elektromagnetisches, stromlos geschlossenes Auslaßventil Druckmittel in einen Niederdruckspeicher abgelassen. Aus diesem fördert eine Rückförderpumpe das Druckmittel wieder in die Bremsleitung zwischen das hydraulische 3/2-Wegeventil und das Einlaßventil. Für eine Antriebsschlupfregelung ist die Saugseite der Pumpe über den dritten Anschluß des 3/2-Wegeventils mit dem Hauptzylinder verbunden, so daß sie über den Hauptzylinder aus dem Druckmittelbehälter ansaugen kann. Bei unbetätigter Bremse ist die Verbindung vom Hauptbremszylinder zur Saugseite der Pumpe hergestellt, während die Bremsleitung gesperrt ist. Sobald vom Hauptbremszylinder aus Druck aufgebaut wird, stellt sich das 3/2-Wegeventil in seine zweite Schaltposition, in welcher die Verbindung vom Hauptbremszylinder zur Radbremse hergestellt ist.

Hydraulische Umschaltventile haben den Vorteil, daß elektrische Leitungen eingespart werden. Es ist jedoch von Nachteil, daß bei jeder Bremsbetätigung zum Umschalten des Ventils ein gewisses Schaltvolumen benötigt wird, welches das Pedalgefühl im Bremspedal beeinträchtigt, da beim Schließen des Ventils die Schaltervolumenaufnahme ruckartig erfolgt.

Die Aufgabe der vorliegenden Erfindung besteht daher darin, ein hydraulisches Umschaltventil zu schaffen, welches Beeinträchtigungen bei der Pedalbetätigung vermeidet.

Diese Aufgabe wird gelöst durch die kennzeichnenden Merkmale des Hauptanspruchs.

Das Prinzip der Erfindung besteht darin, durch Verlangsamung der Schaltzeit die Aufnahme des Schaltvolumens kontinuierlich ablaufen zu lassen, so daß der Fahrer keinerlei Einflüsse auf das Bremspedal bemerkt.

Weitere vorteilhafte Merkmale ergeben sich aus den Unteransprüchen.

Insbesondere die Verwendung einer Membran als Betätigungseinrichtung bringt den Vorteil mit sich, daß kein "Stick-slip-Effekt" auftritt, also kein ruckartiges Anlaufen wie bei einem Kolben mit Gummidichtung. Außerdem läßt eine Membran ihre Wirkfläche variieren, abhängig vom Schalthub.

Eine nähere Erläuterung des Erfindungsgedankens erfolgt nun mit der Beschreibung von vier bevorzugten Ausführungsbeispielen anhand von Zeichnungen. Es zeigen:
- Fig. 1: ein erfindungsgemäßes Umschaltventil in drucklos geschlossener Ausführung;
- Fig. 2: ein erfindungsgemäßes Umschaltventil in drucklos offener Ausführung;
- Fig. 3 und 4: jeweils eine weitere drucklos offene Ausführungsform des erfindungsgemäßen Umschaltventils.

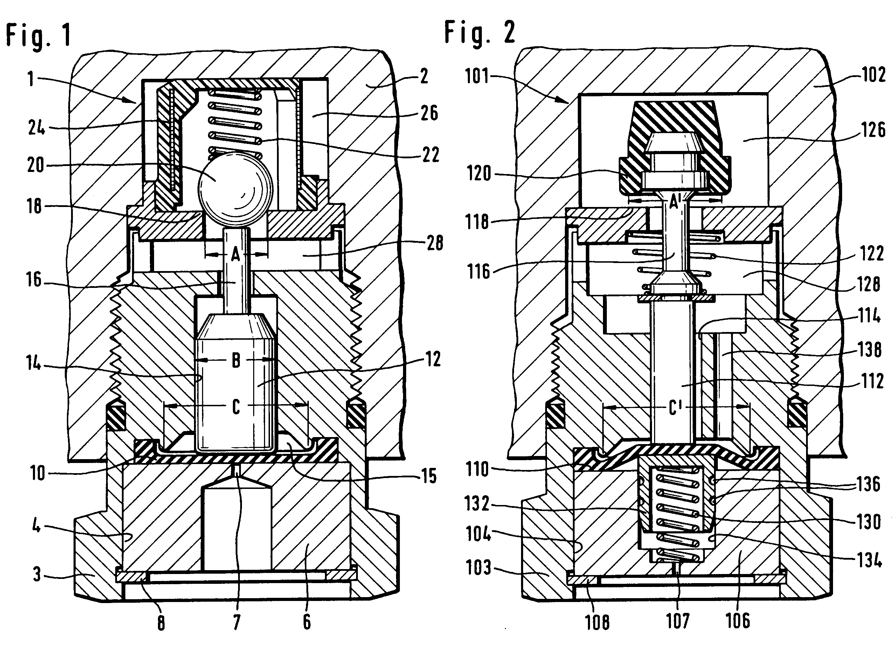

Das in Fig. 1 dargestellte Umschaltventil 1 ist im Gehäuse 2 angeordnet und wird durch den Schraubkörper 3, der in das Gehäuse 2 dicht eingeschraubt ist, festgehalten. Anstelle einer Verschraubung kann auch eine Verstemmung oder Steckverbindung eines Verschlußkörpers vorgenommen werden. Weitere Möglichkeiten der Befestigung bestehen in der Anbringung eines Sprengringes am Gehäuse oder auch im "Self-chlinching". Dabei wird ein Verschlußkörper gewählt, der härter ist als das ihn aufnehmende Gehäuse. Beim kraftunterstützten Einführen des Verschlußkörpers verformt sich das Gehäuse derart, daß eine formschlüssige Verbindung entsteht.

Der Schraubkörper 3 besitzt nach außen hin eine zylindrische Ausnehmung 4, in welcher mit dem Sprengring 8 der Einsatz 6 befestigt ist. Auf der Mittelachse des Einsatzes 6 ist der Atmosphärenanschluß 7 angelegt, welcher die Membran 10, welche durch den Einsatz 6 an den Schraubkörper 3 gepreßt wird, mit der Atmosphäre verbindet. Auf der ins Gehäuseinnere weisenden Seite der Membran 10 liegt der Kolben 12 an. Dieser ist in der Bohrung 14, die sich zur Membran 10 hin zu einem Druckraum 15 erweitert, mit enger Passung geführt. An seiner der Membran 10 abgewandten Stirnseite besitzt der Kolben 12 einen axialen Stößel 16, der in die Öffnung des Ventilsitzes 18 ragt und am Ventilschließglied 20 anliegt. Das Ventilschließglied 20 wird von der Ventilfeder 22 zum Ventilsitz 18 hin beaufschlagt. Der Filter 24, der vor der Montage in den Ventilsitz 18 eingepreßt wurde, dient zugleich als Federtopf für die Ventilfeder 22. Somit hat das Umschaltventil 1 drei Kammern 26,28 und 15, die zumindest zeitweise unterschiedlichen Drücken ausgesetzt sein können. Die Kammer 26 oberhalb des Ventilsitzes 18 steht unter dem Druck des Hauptbremszylinders. In der Kammer 28 unterhalb des Ventilsitzes 18 und oberhalb des Kolbens 12 herrscht der Druck an der Saugseite der Pumpe. Der Druck im Druckraum 15 zwischen dem Kolben 12 und der Membran 10 kann zeitweise von dem in der Kammer 28 abweichen, da die einzige Druckmittelverbindung zur Kammer 28 am Umfang des Kolbens 12 entlang verläuft, so daß nur ein gedrosselter Druckmittelstrom in den Druckraum 15 gelangt. Für die Funktion des Ventils sind drei Querschnittsflächen von Bedeutung, nämlich der Öffngungsquerschnitt A des Ventilsitzes 18, der Querschnitt B des Kolbens 12 sowie der Wirkungsquerschnitt C der Membran 10. A ist kleiner gewählt als B, und C ist größer als B. Dadurch ergibt sich folgende Funktion:

In Ruhestellung ist das Umschaltventil 1 geschlossen. Bei einer pedalbetätigten Bremsung steigt in Kammer 26 der Druck an, während in Kammer 28 und dem Druckraum 15 Atmosphärendruck herrscht. Also bleibt das Ventil geschlossen. Während einer Blockierschutzregelung sinkt zwar der Druck in Kammer 28 unter Atmosphärendruck, da aber gleichzeitig vom Hauptzylinder her Bremdruck ansteht, ist die Schließkraft auf das Ventilschließglied 20 größer als die Saugkraft der Pumpe in Kammer 28. Auch hier öffnet sich das Ventil also nicht. Nur bei einer Antriebsschlupfregelung, wenn der Druck in Kammer 28 unter Atmosphärendruck liegt, in Kammer 26 jedoch Atmosphärendruck herrscht, sind die Öffnungskräfte größer als die Schließkräfte. Dies ergibt sich durch den Querschnitt B, der größer ist als Querschnitt A. Das Ventil öffnet sich sofort, da die durch den Hub des Kolbens 12 im Druckraum 15 bewirkte Volumenvergrößerung durch die flexible Membran 10 ausgeglichen wird. Durch den in der Kammer 28 gegenüber dem Druckraum 15 abgesenkten Druck wandert das Druckmittel aus dem Druckraum 15 allmählich am Kolbenumfang entlang in die Kammer 28. Bei Beendigung der Antriebsschlupfregelung herrscht in Kammer 28 wieder Atmosphärendruck, während im Druckraum 15 der Druck noch unter Atmosphärendruck liegt und das Volumen nahe Null ist, weil die Membran 10 flächig am Schraubkörper 3 anliegt. Zusätzlich wirkt von unten auf die Membran 10 über den Atmosphärenanschluß 7 der Atmosphärendruck. Das Ventil kann sich daher nur langsam schließen, weil der Druckausgleich im Druckraum 15 nur gedrosselt erfolgen kann. Deshalb wird kontinuerlich Druckmittel zum Schließen des Umschaltventils 1 aufgenommen. Dieses langsame Schließen erfolgt unabhängig davon, ob auf die Antriebsschlupfregelung unmittelbar eine Pedalbremsung erfolgt oder nicht. Auch wenn eine Pedalbremsung stattfindet, ist kein negativer Einfluß auf das Bremspedal zu spüren, weil die Schaltvolumenaufnahme des Umschaltventils 1 der Volumenaufnahme der Bremsanlage bei einer Bremsung angeglichen ist.

In Fig. 2 ist eine zweite Ausführungsform eines erfindungsgemäßen Umschaltventils abgebildet. Die Bezugszeichen von Teilen, die dieselbe Funktion erfüllen wie in Fig. 1, sind gegenüber Fig. 1 um 100 erhöht. Dieses zweite Umschaltventil 101 ist in Ruhestellung geöffnet. Zusätzlich zum Atmosphärendruck wirkt die Membran 110 von unten in Öffnungsrichtung die Kraft der Hilfsfeder 130. Sie beaufschlagt von innen den Boden des topfartigen Hilfskolbens 132, der in der Bohrung 134 mit enger Fassung geführt ist, zur Membran 110 hin. An seinem Umfang besitzt der Hilfskolben 132 umlaufende Ringspalte 136, so daß der Hilfskolben 132 mit seinem Umfang im Zusammenspiel mit der Bohrung 134 eine Drosselstelle bildet. Von unten kann der Membran nur am Hilfskolbenumfang entlang Luft zugeführt werden. Oberhalb der Membran 110, also im druckmittelgefüllten Bereich des Umschaltventils 101, erfolgt keine Drosselung. Der Kolben 112 verläuft mit Spiel durch die Bohrung 114. Zusätzlich ist daneben noch eine Bypassverbindung 138 von der an der Saugseite der Pumpe angeschlossenen Kammer 128 zur Oberseite der Membran 110 vorgesehen. Dieser Bypass 138 kann aber auch entfallen, wenn der Querschnitt der Bohrung 114 entsprechend groß bemessen ist. Die Ventilfeder 122, welche im Vergleich zur Hilfsfeder 130 schwach ausgelegt ist, stützt sich in dieser Ausführung an der Unterseite des Ventilsitzes 118 einerseits und an einer formschlüssig mit dem Kolben 112 verbundenen Ringscheibe andererseits ab und beaufschlagt den Kolben 112 in Schließrichtung des Umschaltventils 101. Das Ventilschließglied 120 ist nicht kugelförmig, sondern formschlüssig mit dem Stößel 116 verbunden. Die Wirkfläche A' des Ventils 120/118 ist durch die vom Ventilschließglied 120 am Ventilsitz 118 abgedeckte Schließfläche bestimmt. Während der Querschnitt des Kolbens 112 keinen Einfluß auf das Ventilverhalten hat, fließt der Querschnitt des Hilfskolbens 132 ein aufgrund der Drosseleffekte an seinem Umfang. Bei diesem Umschaltventil 101 wirkt bei einer Pedalbremsung der Hauptzylinderdruck sofort auf den gesamten Wirkungsquerschnitt C' der Membran 110. Er arbeitet gegen die Kraft der Hilfsfeder 130 und das unterhalb der Membran 110 eingesperrte Luftvolumen, welches nur gedrosselt an die Atmosphäre abgegeben werden kann, so daß die Schließzeit dieses Umschaltventils verlängert ist.Im Gegensatz zum Beispiel nach Fig. 1 verläuft in Fig. 2 auch die Öffnung des Ventils verlangsamt, da zur Unterseite der Membran nur allmählich Luft zuströmen kann. Da dieses Ventil drucklos offen ist, ist beim Einsetzen einer Antriebsschlupfregelung kein schnelles Schalten erforderlich, weil sich das Umschaltventil 110 schon in der benötigten Position befindet. In beiden Ausführungsbeispielen sind also sichere Funktion und ein ungestörtes Pedalgefühl gewährleistet.

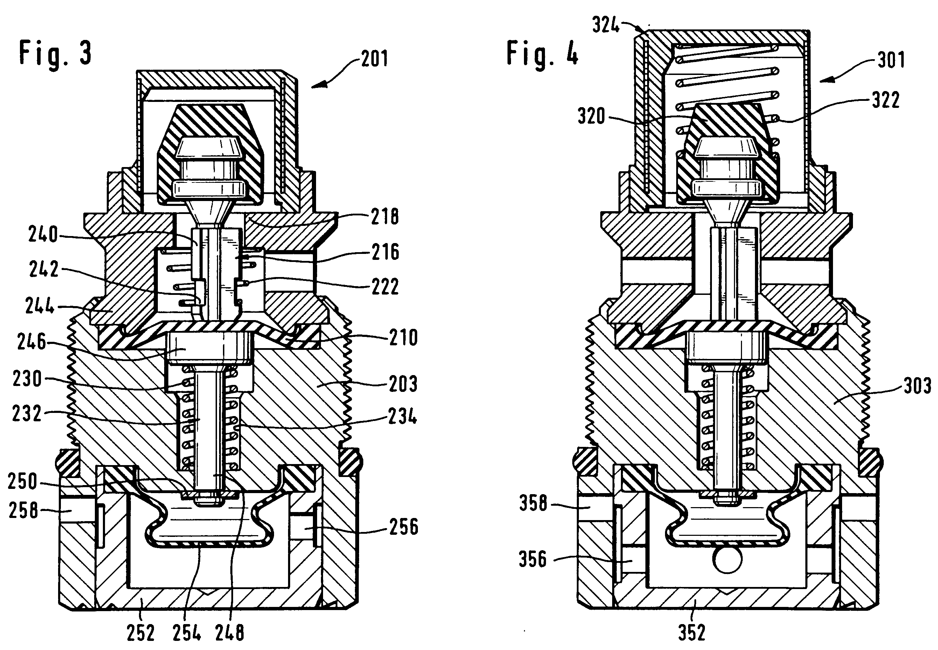

In Figur 3 und Figur 4 sind weitere Varianten einer drucklos offenen Auslegung des Umschaltventils dargestellt. Die Bezugszeichen von Teilen, welche in den vorherigen Figuren Entsprechungen haben, sind um weitere 100 bzw. 200 erhöht.

In Figur 3 wird gegenüber Figur 2 eine erhebliche Baulängenverkürzung erzielt, indem der Kolben 112 im Umschaltventil 201 entfällt und die Membran 210 direkt mit dem Stößel 216 in Berührung steht. Der Stößel 216 hat einen sternförmigen Querschnitt, wodurch einerseits aufgrund der Längsrippen 240 seine Formstabilität erhöht wird und andererseits ein größerer Ventilöffnungsquerschnitt erzielt wird. Die kegelstumpfförmige Ventilfeder 222 wirkt direkt auf Einkerbungen 242 in den Längsrippen 240 ein, wodurch die Ringscheibe eingespart wird.

Die Membran 210 liegt hier durch den Wegfall eines weiteren Kolbens dichter am Ventilsitz 218, zwischen dem Schraubkörper 203 und dem darauf eingescherten Einsatz 244, welcher zugleich den Ventilsitz 218 bildet. Aus Fertigungsgründen kann der Ventilsitz aber auch an einem separaten Teil angebracht werden, ähnlich wie in Figur 2.Der von der anderen Seite an der Membran 210 anliegende Hilfskolben 232 ist hier stempelartig ausgebildet, wobei der Stempelfuß 246 sich an der Membran 210 befindet. Der Hilfskolben 232 ist im Schraubkörper 203 in einer axialen, zweifach gestuften Bohrung 234 geführt, deren größter Durchmesser dem Stempelfuß 246 und deren kleinster Durchmesser dem ihn durchragenden Stempelstiel 248 angepaßt ist. Im Bereich des dazwischenliegenden, mittleren Durchmessers der Bohrung 234 ist die Hilfsfeder 230 angeordnet, die sich an der Stufe zu kleinsten Durchmesser abstützt und den Stempelfuß 246 zur Membran 210 hin mit einer Kraft beaufschlagt, die größer ist als die entgegengerichtete Kraft der Ventilfeder 222. Der Hub des Hilfskolbens 232 zur Membran 210 hin ist durch eine Ringscheibe 250 begrenzt, welche außerhalb des Schraubkörpers 203 in den Stempelstiel 248 eingreift. Zur Kostenreduzierung kann das untere Ende des Stempelstiels 248 auch einfach durch einen Nietvorgang verbreitert werden.

Zum Schutz vor Verschmutzung und Korrosion ist um die Austrittsstelle des Stempelstiels 248 aus dem Schraubkörper 203 herum eine elastische Schutzkappe 254 angebracht, welche von einem topfartigen, mit dem Schraubkörper 203 verstemmten Schutzdeckel 252 am Schraubkörper 203 befestigt ist. Die Schutzkappe 254 bietet bei vollem Druckausgleich absolute Dichtheit gegenüber Schmutz und Flüssigkeiten, während der Schutzdeckel vor mechanischer Beschädigung schützt. Dazu ist er mit einer radialen Öffnung 256 versehen, die gegenüber der radialen Öffnung 258 im Schraubkörper 203 am Umfang versetzt angeordnet ist, so daß ein Druckausgleich möglich ist, eine Beschädigung der Schutzkappe 254, beispielsweise durch einen spitzen Gegenstand, aber ausgeschlossen ist. Die Schutzkappe 254 und/oder der Schutzdeckel 252 können bei fehlender Verschmutzungs- oder Beschädigungsgefahr entfallen. Die Schutzkappe 254 kann beispielsweise in eine radiale Ringnut im Schraubkörper 203 eingreifen. Wenn beide Schutzelemente wegfallen, ergibt sich eine weitere Baulängenverkürzung.

Die in Figur 4 dargestellte Bauart ist eng an die von Figur 3 angelehnt. Der markanteste Unterschied besteht in der Anordnung der im Umschaltventil 301 als zylindrische Schraubenfeder ausgebildeten Ventilfeder 322. Wie in Figur 1 beaufschlagt sie das Schließglied 320, wobei sie sich am Filter 324 abstützt.

Außerdem sind alle radialen Kanäle paarweise gegenüberliegend zweifach vorhanden. Zur Vermeidung von Überdeckungen der radialen Öffnung 356 und 358 im Schutzdeckel 352 und im Schraubkörper 303 wurden die Öffnungen 356 axial versetzt angebracht.

### Bezugszeichenliste

- 1: Umschaltventil
- 2: Gehäuse
- 3: Schraubkörper
- 4: Ausnehmung
- 6: Einsatz
- 7: Atmosphärenanschluß
- 8: Sprengring
- 10: Membran
- 12: Kolben
- 14: Bohrung
- 15: Druckraum
- 16: Stößel
- 18: Ventilsitz
- 20: Ventilschließglied
- 22: Ventilfeder
- 24: Filter
- 26: Kammer
- 28: Kammer
- 101: Umschaltventil
- 102: Gehäuse
- 103: Schraubkörper
- 104: Ausnehmung
- 106: Einsatz
- 107: Atmosphärenanschluß
- 108: Sprengring
- 110: Membran
- 112: Kolben
- 114: Bohrung
- 116: Stößel
- 118: Ventilsitz
- 120: Ventilschließglied
- 122: Ventilfeder
- 126: Kammer
- 128: Kammer
- 130: Hilfsfeder
- 132: Hilfskolben
- 134: Bohrung
- 136: Ringspalte
- 138: Bypass
- 201: Umschaltventil
- 203: Schraubkörper
- 210: Membran
- 216: Stößel
- 218: Ventilsitz
- 222: Ventilfeder
- 230: Hilfsfeder
- 232: Hilfskolben
- 234: Bohrung
- 240: Längsrippen
- 242: Einkerbungen
- 244: Einsatz
- 246: Stempelfuß
- 248: Stempelstiel
- 250: Ringscheibe
- 252: Schutzdeckel
- 254: Schutzkappe
- 256: radiale Öffnung
- 258: radiale Öffnung
- 301: Umschaltventil
- 303: Schraubkörper
- 320: Schließglied
- 322: Ventilfeder
- 324: Filter
- 352: Schutzdeckel
- 356: radiale Öffnungen
- 358: radiale Öffnungen

## Patentansprüche

1. Hydraulisches Umschaltventil (1,101,201,301) für eine Fahrzeugbremsanlage mit einem an einen Druckmittelbehälter angeschlossenen Hauptbremszylinder, der über eine Bremsleitung zumindest mit der Radbremse eines angetriebenen Rades verbunden ist, mit einer nach dem Rückförderprinzip arbeitenden Blockierschutzeinrichtung und mit einer selbstansaugenden Rückförderpumpe, die in die Bremsleitung fördert und deren Saugseite für eine Antriebsschlupfregelung über eine Saugleitung und über den Hauptbremszylinder mit dem Druckmittelbehälter verbindbar ist, wobei das Umschaltventil in der Saugleitung angeordnet ist und zumindest immer dann die Verbindung sperrt, wenn die Bremsanlage durch den Hauptbremszylinder betätigt wird, und zumindest immer dann die Verbindung freigibt, wenn die Pumpe saugt ohne gleichzeitige Bremsbetätigung durch den Hauptbremszylinder, dadurch **gekennzeichnet**, daß das Umschaltventil (1,101,201,301) eine Membran (10,110,210) besitzt, welcher zumindest von einer Seite ein Medium nur über eine Drosselvorrichtung (12/14, 132/134,232/234) zu- und abgeführt werden kann und welche einen Bereich mit Atmosphärenanschluß (7,107) von einer ersten Kammer ( 28,128) trennt, die mit der Saugseite der Pumpe in Verbindung steht, und daß von der ersten Kammer (28,128) zu einer zweiten Kammer (26,126), welche dem Hauptzylinderdruck ausgesetzt ist, eine Verbindung besteht, die durch einen an einen Ventilsitz (18,118) anlegbares, von der Membran (10,110) bewegbares Schließglied (20,120) sperrbar ist.

2. Hydraulisches Umschaltventil nach Anspruch 1, dadurch **gekennzeichnet**, daß die Drosselvorrichtung jeweils von einem in einer Bohrung (14,134,234) mit enger Passung geführten Kolben (12,132,232) gebildet wird, wobei die Drosselung bei axialer Strömung am Kolbenumfang entlang erfolgt

3. Hydraulisches Umschaltventil nach Anspruch 1 oder 2, dadurch **gekennzeichnet**, daß die Membran (110,210) von der Seite des Atmosphärenanschlusses (107,256) zusätzlich mit der Kraft einer Hilfsfeder (130,230) beaufaufschlagt ist und daß das Umschaltventil (101) drucklos offen ist.

## Claims

1. Hydraulic change-over valve (1, 101, 201, 301) for a vehicle brake system that includes a master brake cylinder connected to a pressure fluid reservoir and communicating at least with the wheel brake of a driven wheel by way of a brake line, an anti-lock control device operating according to the return delivery principle, and a self-priming return pump which supplies fluid into the brake line and which has a suction side that is connectable to the pressure fluid reservoir by way of a suction line and the master brake cylinder for traction slip control operations, the change-over valve for arrangement in the suction line and for shutting off the connection at least when the brake system is operated by the master brake cylinder and for opening the connection at least when the pump aspirates fluid without simultaneous brake operation by the master brake cylinder,
**characterized** in that the change-over valve (1, 101, 201, 301) comprises a diaphragm (10, 110, 210) which is adapted for fluid supplied or removed, at least from one side only by way of a throttling device (12/14, 132/134, 232/234), and which isolates an area with an atmospheric port (7, 107) from a first chamber (28, 128) which is in communication with the suction side of the pump, and in that a connection is established between the first chamber (28, 128) and a second chamber (26, 126) to which the master cylinder pressure is applied, which connection is closable by a closure member (20, 120) that is adapted to bear against a valve seat (18, 118) and is movable by the diaphragm (10, 110).

2. Hydraulic change-over valve as claimed in claim 1,
**characterized** in that each throttling device includes a piston (12, 132, 232) guided in a close fit in a bore (14, 134, 234), the throttling being effected along the piston's periphery in the presence of axial fluid flow.

3. Hydraulic change-over valve as claimed in claim 1 or 2,
**characterized** in that the diaphragm (110, 210) in addition is acted upon by the force of an auxiliary spring (130, 230) from the side of the atmospheric port (107, 256), and in that the change-over valve (101) is open in a de-energized state.

## Revendications

1. Valve hydraulique de commutation (1, 101, 201, 301), pour un système de freinage pour véhicule comprenant un maître-cylindre de frein, qui est raccordé à un réservoir d'agent de pression et qui communique au moins avec le frein de roue d'une roue motrice par l'intermédiaire d'une conduite de frein, un dispositif antiblocage, qui fonctionne suivant le principe de retour, et une pompe de refoulement, à auto-amorçage, qui refoule dans la conduite de frein et dont le côté d'aspiration est agencé de façon à pouvoir communiquer, pour une régulation du glissement de traction, avec le réservoir d'agent de pression par l'intermédiaire d'une conduite d'aspiration et par l'intermédiaire du maître-cylindre de frein, la valve de commutation étant disposée dans la conduite d'aspiration, en bloquant la communication au moins chaque fois que le système de freinage est actionné au moyen du maître-cylindre de frein et en autorisant la communication au moins chaque fois que la pompe aspire sans actionnement simultané du frein au moyen du maître-cylindre de frein, caractérisée en ce que la valve de commutation (1, 101, 201, 301) comprend une membrane (10, 110, 210) vers laquelle et à partir de laquelle, au moins d'un côté, un agent peut être envoyé et renvoyé uniquement par l'intermédiaire d'un dispositif d'étranglement (12/14, 132/134, 232/234) et qui isole une zone, comportant un raccord atmosphérique (7, 107), vis-à-vis d'une première chambre (28, 128) qui communique avec le côté d'aspiration de la pompe et en ce que, de la première chambre (28, 128) vers une seconde chambre (26, 126) qui est soumise à la pression du maître-cylindre, il existe une communication qui est agencée de façon à pouvoir être bloquée au moyen d'un obturateur (20, 120) agencé de façon à pouvoir être appliqué sur un siège de valve (18, 118) et de façon à pouvoir être déplacé par la membrane (10, 110).

2. Valve hydraulique de commutation selon la revendication 1, caractérisée en ce que le dispositif d'étranglement est dans chaque cas formé d'un piston (12, 132, 232) guidé dans un alésage (14, 134, 234) en ajustement étroit, l'étranglement ayant lieu lors d'un écoulement axial le long de et suivant la surface périphérique du piston.

3. Valve hydraulique de commutation selon la revendication 1 ou 2, caractérisée en ce que, du côté du raccord atmosphérique (107, 256), la membrane (110, 210) est soumise en sus à la force d'un ressort auxiliaire (130, 230) et en ce que la valve de commutation (101) est ouverte en l'absence de pression.
